# EUROPEAN PATENT APPLICATION

(11) **EP 4 456 017 A1**
(43) Date of publication of application: **30.10.2024**
(21) Application number: 23170430.5
(22) Date of filing: 27.04.2023
(51) Int. Cl.: G06V 20/58, G06V 20/59, E05F 15/73

(54) **METHOD AND SYSTEM FOR ASSISTING OPENING OR CLOSING OF A DOOR**

(71) Applicant: TOYOTA JIDOSHA KABUSHIKI KAISHA, Toyota-shi, Aichi-ken, 471 8571 (JP)
(72) Inventor: VAN LOOCK, Mark, 1140 BRUSSELS (BE); ABDELKAWY, Hazem, 1140 BRUSSELS (BE); SUNDRAM, Jugesh, 1140 BRUSSELS (BE); FRANCESCA, Gianpiero, 1140 BRUSSELS (BE); MEIER, Sven, 1140 BRUSSELS (BE); DESPINOY, Fabien, 1140 BRUSSELS (BE); KNAPP, Jakob, 1140 BRUSSELS (BE); ACCAD, Dimitri, 1140 BRUSSELS (BE)
(74) Representative: Cabinet Beau de Loménie

(57) **Abstract**

A computer-implemented method for assisting opening or closing of a door, comprising:
- obtaining at least one image showing at least one region of interest, the at least one region of interest comprising a door operating area or an area adjacent the door operating area;
- detecting, in the at least one image, whether at least one object is present in the region of interest;
- determining, based on the detection, at least one interference indicator for opening or closing the door.

## Description

### BACKGROUND OF THE INVENTION

### 1. Field of the invention

The present disclosure relates to the field of automation, and in particular to a method and system for assisting opening or closing of a door. The method and system may find applications in all kinds of industries, including the automotive industry.

### 2. Description of Related Art

In recent years, there has been an increasing demand for automation throughout all fields of technology. In particular, the field of autonomous vehicles has seen great developments to partly or fully automate the driving tasks conventionally performed by the driver. However, in a vehicle, and more particularly in shared vehicles such as buses, shuttles, trains, etc., the driver (or, as the case may be, the conductor or the operator) usually performs other tasks than purely driving tasks, e.g. supervising opening and closing of doors, deciding whether the vehicle can depart, helping disabled people, dealing with emergency situations and the like.

Thus, there is a need for further automation, in particular as regards assisting opening and closing of doors.

The following reference discloses methods relating to the field of background management in images:
[REF. 1] Shanchuan Lin et al.: Real-Time High-Resolution Background Matting, arXiv:2012.07810v1

### SUMMARY

In this respect, the present disclosure relates to a computer-implemented method for assisting opening or closing of a door, comprising:
- obtaining at least one image showing at least one region of interest, the at least one region of interest comprising a door operating area or an area adjacent the door operating area;
- detecting, in the at least one image, whether at least one object is present in the region of interest;
- determining, based on the detection, at least one interference indicator for opening or closing the door.

The steps of the method may be carried out by one or more processors. The method is referred to hereinafter as the assistance method.

The obtaining at least one image may comprise acquiring an image, e.g. through an image acquisition module such as a camera, or getting an already acquired image from a database, e.g. a local or distant server or the like. Hereinafter, unless otherwise stated, "the image" refers to the at least one image. More generally, as used herein, for conciseness and unless the context indicates otherwise, "a", "an", and "the" are intended to refer to "at least one" or "each" and to include plural forms as well. Conversely, generic uses of plural include singular forms as well.

In some embodiments, the at least one image comprises a plurality of successive frames of a video clip. Alternatively, the at least one image may comprise a plurality of non-successive frames of a video clip, e.g. selected at a given sampling frequency (e.g. every third frame of the video clip). Yet alternatively, the at least one image may comprise one or more static images, e.g. photographs. Using frames from a video clip enables to confirm the detected information over time, which brings robustness to the method.

Each obtained image may show one or a plurality of regions of interest. A region of interest (ROI) is a region of the door environment in which elements of interest for determining the interference indicator can be seen. The region of interest comprises a door operating area or an area adjacent the door operating area. In this respect, a door operating area is an area to be crossed by the door during opening or closing of that door. The door operating area does not necessarily cover the full stroke of the door.

In the present disclosure, an object is to be understood as a generic term meaning any obstacle for the door, including a human being, an animal, a plant or an item.

The interference indicator qualifies how much the environment of the door, in particular the objects in the regions of interest, may interfere with opening and/or closing (hereinafter shortened as opening/closing) of the door.

Thus, the above method enables to determine to what extent objects around the door interfere with possible movement (e.g. opening/closing) of the door based only on an image, and to output an interference indicator based on which further operations, such as triggering opening/closing of the door, may be carried out. Therefore, the proposed method offers reliable assistance to opening/closing operations based on a simple input. Accordingly, the task of opening/closing a door can be handled automatically.

Optionally, the method is carried out in real-time, in order to assist opening/closing of a door based on a current situation of the environment around the door.

Optionally, the determining comprises applying a logic-based algorithm taking, as inputs, a plurality of the detections. A logic-based algorithm is an algorithm that is for instance rule-based or probability-based, and that applies these rules or probabilities to a plurality of inputs, i.e. plurality of detections, in order to determine the output. The plurality of detections may include respective detections of a plurality of the objects in the at least one image or detections in a plurality of the images (e.g. one detection per image). By combining detection methods and a logic-based algorithm based on a plurality of detections, the method is not only more reliable because based on plurality of detections, but also simpler because the detections are combined by a logic-based algorithm. This avoids the need of complex models to handle the wide variety of situations. In contrast, fusing the detections through a logic-based algorithm enables to leverage the benefits of simple detections and the reliably of logic-based reasoning which brings human knowledge to the method. This architecture also brings self-adaptability to the assisting method.

Optionally, the at least one image includes a first image showing a first side of a threshold of the door and a second image showing a second side of the threshold of the door, opposite the first side. The threshold of the door is defined by the location of the door when the door is closed. The threshold may be embodied by a frame, a sill or any other means based on the type of door. Thanks to these provisions, both sides of the door threshold are taken into account for determining the interference indicator.

Alternatively or in addition, a single image may show both sides of the threshold of the door.

Optionally, the image is an RGB (red/green/blue) image, or more generally single- or multi-channeled images. An RGB image of a scene comprises pixels having a red value, a green value and a blue value, in order to form colors (including black and white or greyscale) representative of the colors that the scene has. A single-channeled image is an image in which each pixel has a color or intensity represented by a single value, and a multi-channeled image is an image in which each pixel has a color or intensity represented by multiple values. Greyscale is an example of a single-channeled scale while RGB is an example of a multi-channeled scale.

Optionally, the image is obtained by a fisheye camera. A fisheye camera is known per se in the art and enables to acquire a large field of view.

Optionally, the at least one interference indicator comprises a first interference indicator determined on the basis of the first image and a second interference indicator determined on the basis of the second image, and the method further comprises selecting one of the first interference indicator and the second interference indicator that corresponds to a highest level of interference. A level of interference is said to be high when the detected objects would impede or prevent the door from opening/closing, whereas a level of interference is said to be low when the detected objects, if any, would have little or no interaction with the door during a movement of opening/closing. For instance, if the first interference indicator and the second interference indicator are expressed on the same scale and are great when the level of interference is high, the method may select the greatest one of the first interference indicator and the second interference indicator.

Thanks to the first interference indicator and the second interference indicator, the method can take a plurality of object configurations into account and determine the interference indicator based on the highest detected risk of interference between the door and its environment.

In embodiments, the final decision to allow or trigger opening/closing of the door may be based on that selected interference indicator.

Optionally, the first image shows at least partially the second side of the threshold of the door, or wherein the second image shows at least partially the first side of the threshold of the door. In these embodiments, at least one of the images shows the both sides of the door threshold. This enhances the method reliability.

Optionally, the detecting further comprises detecting whether a human is present in the region of interest. That is, detecting whether a human is present is the region of interest is carried out separately from detecting whether an object is present in the region of interest. As a consequence, if a human is present in the region of interest, he/she is expected to be detected both by the object detection and by the human detection. The human detection enables to identify the human as a human, with possible specific implications or precautions, while the object detection is more general and may not classify the objects. In addition, having both object detection and human detection brings redundancy in the method, which also leads to increased robustness.

Optionally, the human is detected by skeleton detection. Skeleton detection is a simple and efficient way to detect human beings.

Optionally, the detecting comprises extracting foreground elements in the at least one image with respect to a reference background. This may apply to the object detection and/or to the human detection. The reference background comprises elements of the door environment which may be static or not with respect to the door or door threshold (e.g. the rest of the vehicle, the road, a tree, a building, etc.) and serves as a reference for detecting foreground elements. Foreground elements are elements which are added on top of the background, e.g. passengers, other vehicles, items on the ground, etc., and which may interfere with the door opening/closing.

Thanks to extracting foreground elements with respect to a reference background, the method can adapt to different backgrounds (e.g. different places, different lightings, etc.) and consider only the relevant elements of the images. Therefore, the image-based assistance is more reliable.

Optionally, the extracting is carried out by a machine learning model. A machine learning model may comprise one or more mathematical expressions configured to process the images in order to output information representative of the foreground elements. Weights of the machine learning model may be iteratively updated by a training method. The machine learning model may comprise an artificial neural network.

Optionally, the extracting comprises calculating a mask of the foreground elements in the at least one image. The mask of the foreground elements shows the foreground elements while masking the other pixels of the image. Mask calculation is known per se in the art of image processing and simple to use. As a consequence, the proposed method is efficient and robust.

Optionally, the method further comprises updating the reference background based on the at least one image if no human is detected in the at least one image. If no human is detected in the image, it is assumed that the image is representative of the actual background, apart from possible objects which are easier to detect and less likely to move on their own. Therefore, absence of humans is leveraged to update the background. Updating the background enables to take account of any change in the environment and ultimately to improve the results of the method.

Optionally, the method comprises initializing the reference background. The initialization may be carried out if no reference background has been set before, or no reference background has been set for a certain period. The initialization may be carried out automatically.

The present disclosure is further directed to a system for assisting opening or closing of a door, comprising:
- an obtaining module for obtaining at least one image showing at least one region of interest, the at least one region of interest comprising a door operating area or an area adjacent the door operating area;
- a detector for detecting, in the at least one image, whether at least one object is present in the region of interest;
- a determining unit for determining, based on the detection, at least one interference indicator for opening or closing the door.

The system, referred to hereinafter as the assistance system, may be configured to carry out the above-mentioned assistance method, and may have part or all of the above-described features. The assistance system may have the hardware structure of a computer.

The present disclosure is further directed to a vehicle comprising at least one door and the above-described system for assisting opening or closing of the door. The vehicle may be an automotive vehicle such as a car, a bus, a shuttle, etc., or other vehicles such as trains, airplanes, etc.

Optionally, the vehicle is an autonomous vehicle. The assistance system may fulfil non-driving functions of the autonomous vehicle.

The present disclosure is further related to a computer program set including instructions for executing the steps of the above described assistance method when said program is executed by at least one computer. The programs of this set can use any programming language and take the form of source code, object code or a code intermediate between source code and object code, such as a partially compiled form, or any other desirable form.

The present disclosure is further related to a recording medium readable by at least one computer and having recorded thereon at least one computer program including instructions for executing the steps of the above described assistance method. The recording medium can be any entity or device capable of storing the program. For example, the medium can include storage means such as a ROM, for example a CD ROM or a microelectronic circuit ROM, or magnetic storage means, for example a diskette (floppy disk) or a hard disk.

Alternatively, the recording medium can be an integrated circuit in which the program is incorporated, the circuit being adapted to execute the method in question or to be used in its execution.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
- Fig. 1 is a flowchart illustrating a calibration part of an assistance method according to an embodiment;
- Fig. 2 is a flowchart illustrating a judgement part of an assistance method according to an embodiment;
- Fig. 3 is a diagrammatic view of a vehicle according to an embodiment.

### DETAILED DESCRIPTION OF EMBODIMENTS

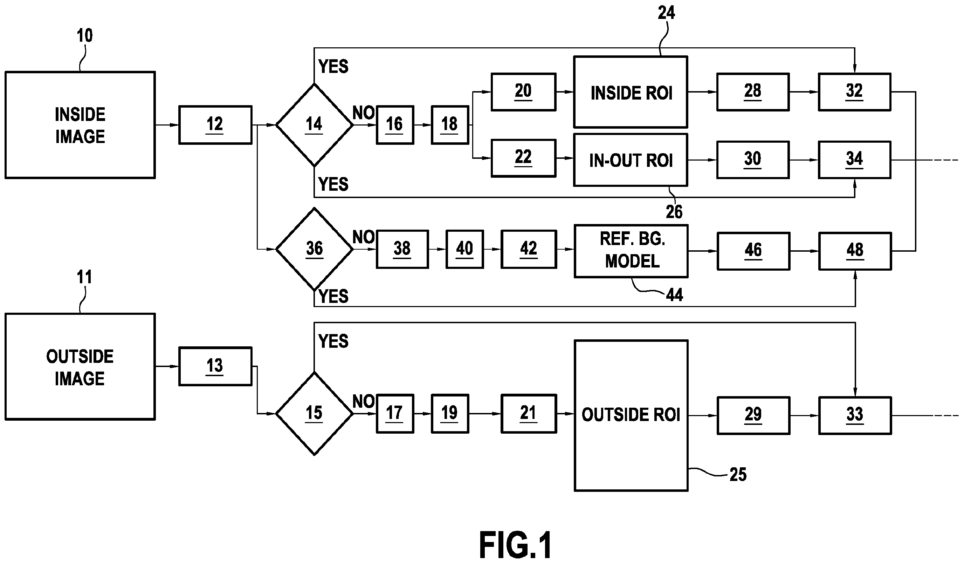

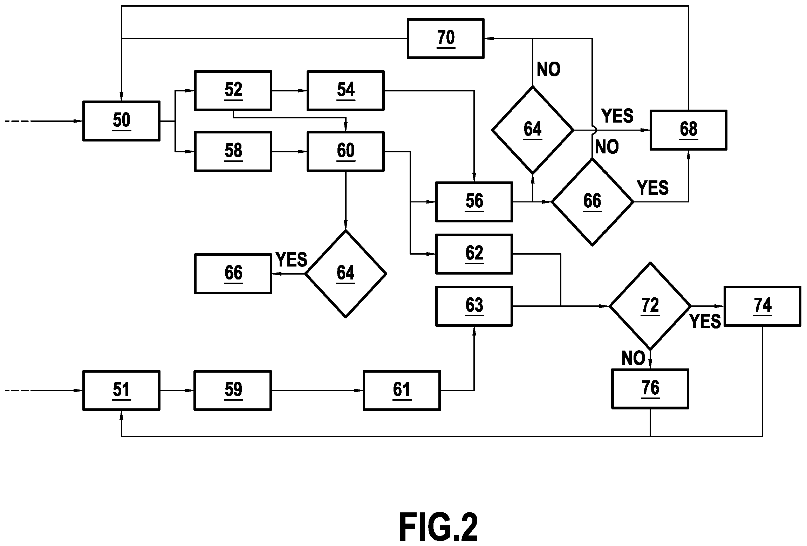

A method for assisting opening or closing of a door according to an embodiment is described with reference to Figs. 1 and 2. In this embodiment, the door is a vehicle door. However, the following description can be transposed to other types of doors.

As shown in Fig. 1, the assistance method comprises obtaining at least one image showing a region of interest, the at least one region of interest comprising a door operating area or an area adjacent the door operating area. Specifically, Fig. 1 shows two such images, namely an inside image 10 and an outside image 11. The inside image 10 (first image) may show a first side (inside) of a threshold of the door, e.g. a vehicle cabin, and the outside image 11 (second image) may show a second side (outside) of the threshold of the door, opposite the first side.

Specifically, the inside image 10 shows a region of interest inside the vehicle, for instance an area of the vehicle ground on which people walk before exiting through the door. In another example, the inside image 10 shows an area in which the door moves, for instance for buses for which the doors sometimes open toward the inside of the vehicle. Such an area is referred to as an inside ROI (region of interest).

Conversely, the outside image 11 shows a region of interest outside the vehicle, for instance an area of the outside ground on which people walk before entering the vehicle through the door. In another example, the outside image 11 shows an area in which the door moves, for instance for vehicles such as cars for which the doors generally open toward the outside of the vehicle. Such an area is referred to as an outside ROI (region of interest).

The inside image 10 and/or the outside image 11 (hereinafter referred to as "the image 10, 11") are described herein as single images, but instead of static images (e.g. photographs), they could each comprise a plurality of images, e.g. a video. In addition, the present disclosure is not limited to a single inside image and a single outside image; more or less images could be envisaged. Besides, instead of having images from two or more viewpoints (here one camera inside the vehicle and one camera outside the vehicle), the assisting method could use only one camera. That camera would desirably show at least the inside of the vehicle, or both the inside and the outside through a window or open door.

The image 10, 11 may be obtained by a camera, e.g. a fisheye camera. Although the fisheye camera may provide a distorted image, the image 10, 11 may not need any rectification before being processed by the assistance method.

As indicated above, at least one of the inside image and the outside image may show both sides of the door threshold. In this example, it is assumed that the inside image (first image) 10 shows at least partially the second side (outside) of the threshold of the door. In such circumstances, a region of interest may overlap the threshold of the door. Hereinafter, a region of interest outside the vehicle but seen from the inside is referred to as an in-out ROI.

At step 12, the assisting method obtains the inside image 10. As the case may be, at step 12, part or all of a video may be obtained. At step 14, the assisting method determines whether the ROI configuration has already been calibrated. If the ROI configuration has already been calibrated (YES), the assisting method proceeds to step 32 of loading the inside ROI and step 34 of loading the in-out ROI based on the inside image 10. Steps 32, 34 may include cropping the inside image 10. The ROI configurations may be loaded from a memory.

However, if the ROI configuration has not been calibrated (NO at step 14), the assisting method enters an ROI calibration process. In step 16, the assisting method reads the inside image 10 for calibration. As the case may be, for instance when the inside image 10 comprises a plurality of image (video or other sequence), the step 16 may include reading a frame thereof. The assisting method then proceeds to step 18.

Step 18 includes an optional cropping to limit the total compute requirements. For instance, step 18 includes cropping the image 10 to the available regions of interest. In this example, there are two regions of interest in the inside image 10, namely the inside ROI and the outside ROI, hence two cropped versions of the image 10. Cropping the image 10 to keep the regions of interest may be carried out manually or automatically, e.g. based on the detection of feature points in the images. For instance, the cropped regions of the image 10 may have a simple shape such as a polygonal, circular or elliptic shape.

After cropping as the case may be, the configurations of each ROI can be created. Step 20 comprises creating the inside ROI configuration, while step 22 comprises creating the in-out ROI configuration. The ROI configurations may comprise a position, size and/or shape of the respective ROIs in the (possibly cropped) inside image 10. As opposed to the cropped images, the shape of the ROI may not be a simple shape, but any possible shape. These steps 20, 22 respectively result in the inside ROI 24 and the in-out ROI 26.

The inside ROI 24 and the in-out ROI 26 may be saved in respective saving steps 28, 30. Once the ROI configurations have been saved, the ROI calibration process proceeds to the loading steps 32, 34 already described.

The outside image 11 may be processed in the same manner, such that the complete calibration will not be described herein again. For instance, steps 13, 15, 17, 19, 21, 29, 33 for obtaining the outside ROI 25 may correspond to the above-described steps 12, 14, 16, 18, 20, 28, 32 for obtaining the inside ROI 24. Naturally, the steps corresponding to the in-out ROI may not be carried out for the outside image 11 is the outside image 11 does not show the inside of the vehicle. However, more generally, more than one region of interest may be loaded, and if need be calibrated, in each obtained image.

The door itself may be visible in at least one of the ROIs.

In order to prepare the object detection which will be described later, the assisting method may determine, at step 36, whether a reference background has been calibrated, e.g. based on the inside image 10. Step 36 may follow step 12 described above. If the reference background has already been calibrated (YES), the assisting method proceeds to step 48 of loading the reference background. The reference background may be loaded from a memory.

However, if the reference background has not been calibrated (NO at step 36), the assisting method enters a reference background initialization process. First, in step 38, the assisting method reads the inside image 10 for calibration. As the case may be, for instance when the inside image 10 comprises a plurality of images (video or other sequence), the step 38 may include reading a frame thereof. At this stage, it may be checked whether the vehicle is empty, e.g. whether no human is present inside the vehicle. Indeed, if a human were present in the vehicle, the inside image 10 would not represent only background data.

At step 12, as the case may be, a video or a plurality of images could be loaded. Therefore, if a human is detected in one of the frames, step 38 may read another frame of the same video in order to be able to properly initialize the reference background. Once no human is detected on the current frame, the assisting method proceeds to step 40. At least one of frame analysis techniques, such as motion estimation, and object detection, may be employed to identify and extract the most representative empty cabin frames from the available plurality of frames. Several frames may be taken into account for creating the reference background model as described below.

Step 40 includes cropping portions of the inside image 10 which are representative of a fixed background. Portions not representative of a fixed background may be left out in order to reduce compute requirements. In this example, the reference background may include any of the vehicle ground, the vehicle seats, the vehicle lateral walls, etc.; conversely, the cropped regions may exclude the vehicle windows, because the landscape visible through the windows may change. Step 40 thus includes cropping the reference background.

After cropping, a reference background model, corresponding to the cropped reference background, may be created. Step 42 comprises creating the reference background model. Any background modeling technique may be used, such as that of [REF. 1]. This step 42 results in the reference background model 44. For instance, creating a reference background model from a plurality of frames may include at least one of aligning the frames, compensating for any misalignments or perspective differences, and averaging pixel values to reduce noise, in order to capture a more accurate representation of the cabin's background.

The reference background model 44 may be saved in a saving step 46. Once the reference background model 44 has been saved, the reference background initialization process proceeds to the loading step 48 already described.

Although certain examples have been described, the ROI calibration process and the reference background initialization process may vary from these examples. For instance, some steps may be omitted (e.g. cropping), or other steps may be added, or the described functions may be performed in another fashion.

Figure 2 illustrates the steps of the assistance method following the steps described with reference to Fig. 1. That is, step 50 of Fig. 2 follows steps 32, 34, 48, while step 51 follows step 31, as shown by the dashed arrows in Figs. 1 and 2.

Figure 2 shows an example of how the assisting method detects, in the obtained images, whether at least one object is present in the region of interest.

Specifically, in step 50, the inside image 10 is obtained. In case of a video, step 50 may comprise reading a particular frame of the video. When the assisting method is applied in real-time, step 50 may read the latest frame of the inside image 10. The method then proceeds to step 52.

At step 52, the content of the inside ROI in the inside image 10 is extracted, based on the inside image 10 (or frame) obtained at step 50 and the inside ROI configuration loaded at step 32. The assisting method then proceeds to step 54.

Step 54 comprises extracting foreground elements in the at least one image (here the current frame) with respect to the reference background loaded at step 48. This extraction may be carried out by a machine learning model, e.g. following [REF. 1].More generally, the extracting may comprise calculating a mask of the foreground elements in the image.

The assisting method then proceeds to step 56, in which it is determined, based on the extracted foreground elements, whether an object is present is the inside ROI. For instance, step 56 may comprise applying the mask of step 54 to the inside image 10 (or a given frame thereof), given the inside ROI configuration of step 32, in order to determine whether foreground elements (objects) are present of not in the inside ROI.

Besides, the assisting method further includes detecting whether a human is present in the region of interest, here in a region of interest outside the vehicle. As regard the inside image, the human detection may be carried out from the image obtained in step 50. Specifically, from step 50, the assisting method proceeds to step 58, possibly in parallel to step 52.

At step 58, the content of the in-out ROI in the inside image 10 is extracted, based on the inside image 10 (or frame) obtained at step 50 and the in-out ROI configuration loaded at step 34. The assisting method then proceeds to step 60.

At step 60, human detection per se is carried out, to determine whether a human is present in the inside ROI and the in-out ROI. For instance, the human may be detected by skeleton detection, e.g. two-dimensional skeleton detection, which is known per se in the art of computer vision.

The assisting method proceeds further to step 56. In view of the above, step 56 gathers the results of the generic object detection and the human detection, to determine whether an object or human is present in the inside ROI.

From above-described step 60, the assisting method also proceeds to step 62 in which, based on the human detection of step 60 and the in-out ROI configuration of step 34, it is determined whether a human is present in the in-out ROI. This determination may be expressed as a first interference indicator, e.g. a numerical value representing the level of interference between the detected human(s) and the in-out ROI.

Optionally, step 60 also leads to a step 64 wherein it is determined whether no human is present in the vehicle (e.g. in the whole inside image or at least in the inside ROI). Should the vehicle be empty indeed (YES), the method proceeds to a step 66 of updating the reference background based on the image. For instance, as an update, the assisting method may use steps 40 to 46 described with reference to Fig. 1, with the image obtained from step 50 instead of that obtained from step 38. However, other methods are possible. For instance, the updating may utilize change detection algorithms and/or scene analysis to identify and incorporate new empty cabin frames into the existing background model.

Updating the reference background when the vehicle turns out to be empty (e.g. with no human inside) enables to take account of changes in the environment of the vehicle, such as light fluctuations (e.g. day/night, sunny/cloudy weather, etc.) or changes of fittings in the vehicle. This enables to maintain high accuracy of the method in varying environment conditions.

The outside image 11 may be processed in the same manner as the inside image 10, such that this processing will not be described herein again. For instance, steps 51, 59, 61 and 63 for detecting objects, and in particular humans, in the outside ROI, may correspond to the above-described steps 50, 58, 60, 62 for detecting humans in the in-out ROI. At step 63, the determination of whether a human is present in the outside ROI may be expressed as a second interference indicator.

The assisting method comprises determining, based on the detections, at least one interference indicator for opening or closing the door. That is, the determinations of steps 56, 62 and 63 are taken into account to derive whether the door may be opened or closed.

In this embodiment, the plurality of detections from steps 56, 62, 63 in the inside ROI, in-out ROI and outside ROI, respectively, are given as inputs to a logic based algorithm. The logic-based algorithm may comprise one or more rules for combining the results of the detection steps 56, 62, 63.

In this embodiment, for instance, at step 64 which follows step 56, it is determined whether an object is detected in the inside ROI. Besides, at step 66, it is determined whether a human is detected in the inside ROI. In an example, if either a human or an object is detected in the inside ROI at step 64 or 66 (YES), the assisting method further proceeds to step 68 and issues an interference indicator stating that the inside ROI is occupied. Therefore, something is likely to interfere with a possible movement of the door, and accordingly, the door may be prevented from opening or closing.

Conversely, if neither an object is detected at step 64 nor a human is detected at step 66 (NO), the assisting method proceeds to step 70 and issues an interference indicator stating that the inside ROI is free. Therefore, the door may open or close without interfering with any human or object inside the vehicle.

As regards the outside of the vehicle, the first indicator of step 62 and the second indicator of step 63 are combined to determine, at step 72, whether a human is detected in the in-out ROI or the outside ROI. In case a human is detected (YES), the assisting method further proceeds to step 74 and issues an interference indicator stating that an ROI outside the vehicle is occupied. Therefore, something is likely to interfere with a possible movement of the door, and accordingly, the door may be prevented from opening or closing.

Conversely, if no human is detected either in the in-out ROI or in the outside ROI (NO), the assisting method proceeds to step 76 and issues an interference indicator stating that the ROI outside the vehicle is free. Therefore, the door may open or close without interfering with any human or object outside the vehicle.

This exemplifies how the assisting method may select, as the interference indicator, one of the first interference indicator and the second interference indicator that corresponds to a highest level of interference, e.g. with a Boolean OR.

Conflicting determinations in the detections may be handled in different ways. In an example, as mentioned above, the highest level of interference may be considered, in order not to take any risk with the door movement. In another example, if the outside ROI shows no human detection but the in-out ROI shows a human detection, it may be decided to ignore the current frame and read another frame for confirmation.

In the above assisting method, it has been described that object detection is carried out inside the vehicle, whereas human detection is carried out both inside and outside the vehicle. While other embodiments are envisaged, this embodiment is advantageous insofar as the environment inside the vehicle does generally not change much, which facilitate object detections, whereas the environment outside the vehicle generally changes much, such that object detection may not prove reliable. In contrast, human detection performs well either inside or outside the vehicle.

The interference indicators of steps 68 or 70 on the one hand, and 74 or 76 on the other hand, may be combined again to determine whether the door could be opened or closed both from an inside point of view and from an outside point of view. Any combination of these interference indicators, such as those mentioned above, is envisaged.

After issuing the interference indicator at steps 68, 70, 74, 76, the assisting method may loop back to steps 50, 51 in order to read subsequent frames of the respective inside and outside videos. In doing so, for instance, the assisting method may be implemented in real time.

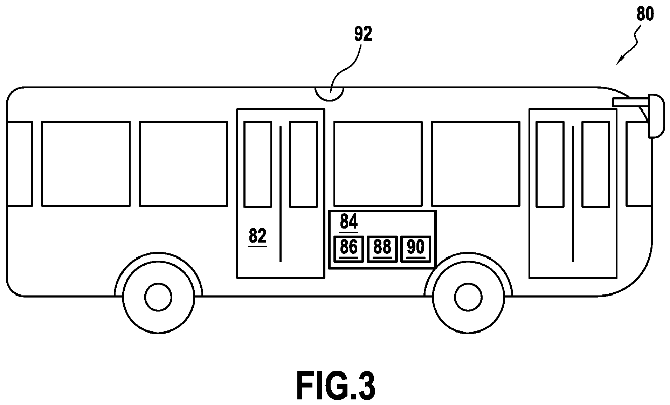

Fig. 3 shows a vehicle 80 comprising a door 82 and an assisting system 84 for assisting opening or closing of the door 82. The system 84 comprises an obtaining module 86 for obtaining at least one image showing at least one region of interest, the at least one region of interest comprising a door operating area or an area adjacent the door operating area; a detector 88 for detecting, in the at least one image, whether at least one object is present in the region of interest; and a determining unit 90 for determining, based on the detection, at least one interference indicator for opening or closing the door 82.

The assisting system 84 may comprise an electronic circuit, a processor (shared, dedicated, or group), a combinational logic circuit, a memory that executes one or more software programs, and/or other suitable components that provide the described functionality. In other words, the assisting system 84 may be a computer device. The assisting system 84 may be connected to a memory (recording medium), which may store data, e.g. a computer program which when executed, carries out the assisting method according to the present disclosure.

The assisting system 84, in particular the obtaining module 86, has an input for receiving a digital image or a stream of digital images. In particular, the assisting system 84, in particular the obtaining module 86, may be connected to an optical sensor, in particular one or more digital cameras 92, e.g. the above-mentioned fisheye camera. The digital camera 92 is configured such that it can record a scene, and in particular output digital data to the assisting system 84, in particular the obtaining module 86.

If the method is to be carried out in real time, the at least one image may be acquired in real time by an image acquisition module, such as a video acquisition module, e.g. a camera or the like (video cameras, photo cameras, etc.). Alternatively or in addition, the at least one image may be acquired beforehand, and obtained by the assisting system 84 later, e.g. in case of post-processing of the filmed process.

Although the present disclosure refers to specific exemplary embodiments, modifications may be provided to these examples without departing from the general scope of the invention as defined by the claims. In particular, although the individual steps of the assisting method have been described in a certain manner, alternatives are possible to yield the same function, either for individual steps or for a subgroup of steps. Besides, although described in the context of autonomous vehicles, the assisting method and system may be implemented for conventional vehicles, e.g. to prevent a vehicle occupant from opening a door from inside when another vehicle (car, bike, etc.) is overtaking. More generally, individual characteristics of the different illustrated/mentioned embodiments may be combined in additional embodiments. Therefore, the description and the drawings should be considered in an illustrative rather than in a restrictive sense.

## Claims

1. A computer-implemented method for assisting opening or closing of a door (82), comprising:
- obtaining at least one image (10, 11) showing at least one region of interest, the at least one region of interest (24, 25, 26) comprising a door operating area or an area adjacent the door operating area;
- detecting, in the at least one image (10, 11), whether at least one object is present in the region of interest (24, 25, 26);
- determining, based on the detection, at least one interference indicator for opening or closing the door (82).

2. The method of claim 1, wherein the determining comprises applying a logic-based algorithm (64, 66, 72) taking, as inputs, a plurality of the detections.

3. The method of claim 1 or 2, wherein the at least one image includes a first image (10) showing a first side of a threshold of the door (82) and a second image (11) showing a second side of the threshold of the door (82), opposite the first side.

4. The method of claim 3, wherein the at least one interference indicator comprises a first interference indicator determined on the basis of the first image (10) and a second interference indicator determined on the basis of the second image (11), and the method further comprises selecting one of the first interference indicator and the second interference indicator that corresponds to a highest level of interference.

5. The method of claim 3 or 4, wherein the first image (10) shows at least partially the second side of the threshold of the door (82), or wherein the second image (11) shows at least partially the first side of the threshold of the door (82).

6. The method of any one of claims 1 to 5, wherein the detecting further comprises detecting (60) whether a human is present in the region of interest, optionally wherein the human is detected by skeleton detection.

7. The method of any one of claims 1 to 6, wherein the detecting (54) comprises extracting foreground elements in the at least one image with respect to a reference background (44), optionally by a machine learning model.

8. The method of claim 7, wherein the extracting comprises calculating a mask of the foreground elements in the at least one image.

9. The method of claim 7 or 8, further comprising updating (66) the reference background based on the at least one image if no human is detected in the at least one image.

10. The method of any one of claims 7 to 9, comprising initializing (42) the reference background.

11. A system (84) for assisting opening or closing of a door (82), comprising:
- an obtaining module (86) for obtaining at least one image (10, 11) showing at least one region of interest (24, 25, 26), the at least one region of interest comprising a door operating area or an area adjacent the door operating area;
- a detector (88) for detecting, in the at least one image (10, 11), whether at least one object is present in the region of interest (24, 25, 26);
- a determining unit (90) for determining, based on the detection, at least one interference indicator for opening or closing the door (82).

12. A vehicle (80) comprising at least one door (82) and the system (84) of claim 11 for assisting opening or closing of the door (80), optionally wherein the vehicle is an autonomous vehicle.

13. A computer program set including instructions for executing the steps of the method of any one of claims 1 to 10 when said program set is executed by at least one computer.

14. A recording medium readable by at least one computer and having recorded thereon at least one computer program including instructions for executing the steps of the method of any one of claims 1 to 10.

## Amended claims

### Amended claims in accordance with Rule 137(2) EPC.

1. A computer-implemented method for assisting opening or closing of a door (82), comprising:
- obtaining at least one image (10, 11) showing at least one region of interest, the at least one region of interest (24, 25, 26) comprising a door operating area or an area adjacent the door operating area;
- detecting, in the at least one image (10, 11), whether at least one object is present in the region of interest (24, 25, 26);
- determining, based on the detection, at least one interference indicator for opening or closing the door (82), wherein the interference indicator qualifies how much the objects in the regions of interest may interfere with opening or closing of the door, and wherein the determining comprises applying a logic-based algorithm (64, 66, 72) taking, as inputs, a plurality of the detections;
- preventing the door (82) from opening and closing when the interference indicator indicates that something is likely to interfere with a possible movement of the door (82), and allowing the door (82) to open and close when the interference indicator indicates that the region of interest (24, 25, 26) is free.

2. The method of claim 1, wherein the at least one image includes a first image (10) showing a first side of a threshold of the door (82) and a second image (11) showing a second side of the threshold of the door (82), opposite the first side.

3. The method of claim 2, wherein the at least one interference indicator comprises a first interference indicator determined on the basis of the first image (10) and a second interference indicator determined on the basis of the second image (11), and the method further comprises selecting one of the first interference indicator and the second interference indicator that corresponds to a highest level of interference.

4. The method of claim 2 or 3, wherein the first image (10) shows at least partially the second side of the threshold of the door (82), or wherein the second image (11) shows at least partially the first side of the threshold of the door (82).

5. The method of any one of claims 1 to 4, wherein the detecting further comprises detecting (60) whether a human is present in the region of interest, optionally wherein the human is detected by skeleton detection.

6. The method of any one of claims 1 to 5, wherein the detecting (54) comprises extracting foreground elements in the at least one image with respect to a reference background (44), optionally by a machine learning model.

7. The method of claim 6, wherein the extracting comprises calculating a mask of the foreground elements in the at least one image.

8. The method of claim 6 or 7, further comprising updating (66) the reference background based on the at least one image if no human is detected in the at least one image.

9. The method of any one of claims 6 to 8, comprising initializing (42) the reference background.

10. A system (84) for assisting opening or closing of a door (82), comprising:
- an obtaining module (86) for obtaining at least one image (10, 11) showing at least one region of interest (24, 25, 26), the at least one region of interest comprising a door operating area or an area adjacent the door operating area;
- a detector (88) for detecting, in the at least one image (10, 11), whether at least one object is present in the region of interest (24, 25, 26);
- a determining unit (90) for determining, based on the detection, at least one interference indicator for opening or closing the door (82), wherein the interference indicator qualifies how much the objects in the regions of interest may interfere with opening or closing of the door and wherein the determining comprises applying a logic-based algorithm (64, 66, 72) taking, as inputs, a plurality of the detections;
wherein the system is configured to prevent the door (82) from opening and closing when the interference indicator indicates that something is likely to interfere with a possible movement of the door (82), and to allow the door (82) to open and close when the interference indicator indicates that the region of interest (24, 25, 26) is free.

11. A vehicle (80) comprising at least one door (82) and the system (84) of claim 10 for assisting opening or closing of the door (82), optionally wherein the vehicle is an autonomous vehicle.

12. A computer program set including instructions for executing the steps of the method of any one of claims 1 to 9 when said program set is executed by at least one computer.

13. A recording medium readable by at least one computer and having recorded thereon at least one computer program including instructions for executing the steps of the method of any one of claims 1 to 9.
